# EUROPEAN PATENT SPECIFICATION

(11) **EP 1 121 783 B1**
(45) Date of publication and mention of the grant of the patent: **07.09.2005**
(21) Application number: 99950680.1
(22) Date of filing: 08.10.1999
(51) Int. Cl.: H04L 12/28, H04L 12/64, H04L 12/66, H04M 7/00

(54) **SWITCHING MEANS OF A CIRCUIT SWITCHED NETWORK**
VERMITTLUNGSMITTEL VON EINEM LEITUNGSVERMITTLUNGSNETZWERK
MOYENS DE COMMUTATION D'UN RESEAU COMMUTE PAR CIRCUITS

(30) Priority: 15.10.1998 DE 19847692
(43) Date of publication of application: 08.08.2001
(73) Proprietor: TELEFONAKTIEBOLAGET LM ERICSSON (publ), 164 83 Stockholm (SE)
(72) Inventor: VERGOPOULOS, George, GR-15341 Agia Paraskevi Athens (GR); LJUNGBERG, Per, D-52072 Aachen (DE); BJÖRKMANN, Jan, S-129 40 Hägersten (SE)
(74) Representative: HOFFMANN EITLE
(86) International application number: PCT/EP1999/007565
(87) International publication number: WO 2000/022781

(56) References cited:
- WO-A-97/50230
- SIMEONOV P L ET AL: "INGATE: A DISTRIBUTED INTELLIGENT NETWORK APPROACH TO BRIDGE SWITCHING AND PACKET NETWORKS" PROCEEDINGS OF THE INTERNATIONAL CONFERENCE ON COMPUTER COMMUNICATIONS AND NETWORKS,1 January 1997 (1997-01-01), XP002073675
- CARBONE P: "INTERNET THRUWAY: A PROFITABLE NEW ROUTE FOR DATA TRAFFIC" TELESIS,CA,BELL-NORTHERN RESEARCH LTD. OTTAWA, no. 102, 1 December 1996 (1996-12-01), pages 6-15, XP002073917 ISSN: 0040-2710

## Description

### Field of the invention

The invention relates to a switching means of a circuit switched network for forwarding a plurality of circuit switched data calls of said circuit switched network to an access server which provides an access to a packet switched data network. In particular, the present invention relates to the efficient use of the resources in the circuit switched network. The invention also relates to a telecommunication system comprising such a circuit switched and packet switched network interconnected through such an access server.

### Background of the invention

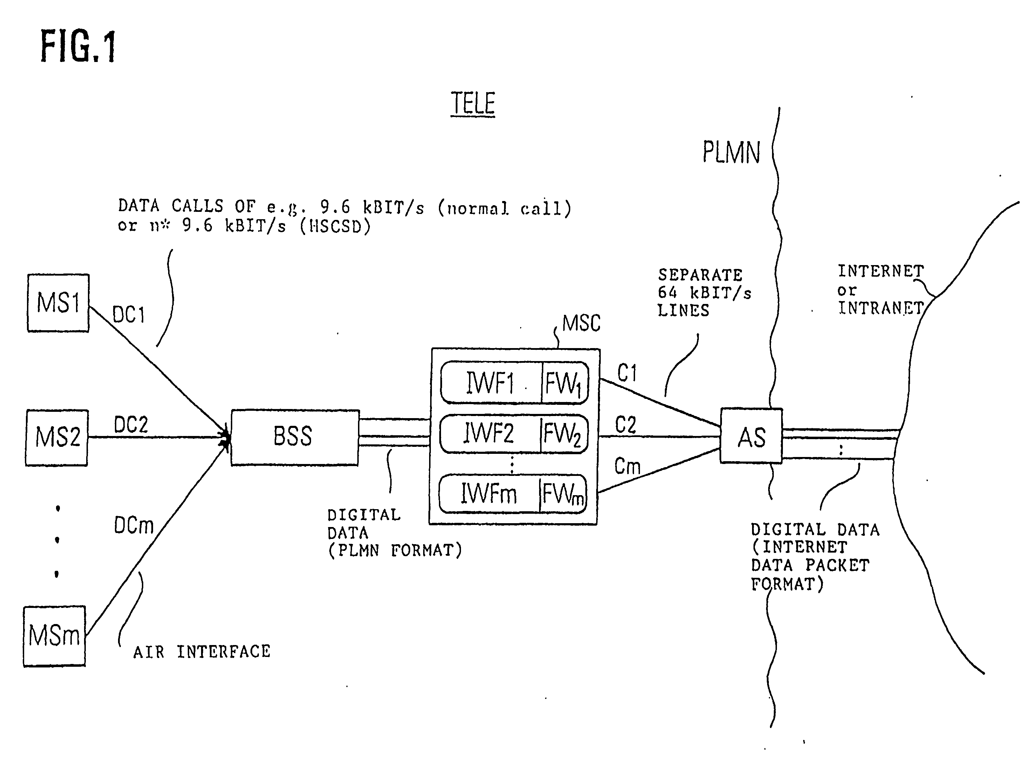

Fig. 1 shows a telecommunication system comprising a mobile circuit switched network GSTN (General Switched Terminal Network), for example a mobile radio communication network PLMN, and at least one packet switched data network, for example the internet or an intranet. As shown in Fig. 1, there is provided an access server AS which provides access to the internet or the intranet for all kinds of calls issued by the terminals (or mobile stations) MS1, MS2...MSm. The access server AS can be considered to be part of the packet switched data network or the circuit switched network. Generally, the access server is owned by the network provider. While Fig. 1 only shows one access server AS providing an access to the packet switched network for calls routed through a switching means MSC of course several access servers AS each serving one (or more) switching means MSC of the circuit switched network may be provided.

If the circuit switched network is a mobile radio communication network, the terminals are formed by mobile stations MS1, MS2...MSm of the mobile radio communication network which output data calls DC1, DC2...DCm which are received by a base station system BSS through an air interface. In a mobile radio communication network the switching means is formed by a mobile switching center MSC which is connected to the base station system BSS through cables or wires. As is also seen in Fig. 1, there are communication connections (e.g. lines) C1, C2,..., Cm which each carry the digital data of the data calls DC1, DC2,..., DCm to the respective access server AS.

Whilst the digital data of the data calls issued by the terminals have a specific transmission format adapted to the mobile radio communication network (i.e. the circuit switched network), the digital data provided to the access server AS from the mobile switching center MSC or from the access server AS to the packet switched network have a transmission format adapted to the packet switched network.

As is seen in Fig. 1, conversion means IWF1/FW1, IWF2/FW2..., IFWm/FWm (IWF/FW: InterWorkingFunction/Forwarding Function) are provided for respectively terminating a respective data call from the circuit switched network and for essentially converting a transmission format of the data calls from the terminals into a transmission format adapted to the packet switched network. In a GSM type (GSM: Global System for Mobile communications) mobile radio communication network, the conversion means typically perform a protocol adaption carried out by the so-called InterWorkingFunktion as defined by the ETSI SMG. Thus, the access server is basically a unit to support the interworking with the intranet/internet for data calls, in particular mobile data calls, having their transmission format converted by the interworking function contained in each conversion means, e.g. a conversion from a digital to a digital format or an analog to a digital format or, as here, from a circuit switched to a packet switched format.

Regarding the function of the IWF/FW (IWF/FW: InterWorkingFunction/Forwarding Function), i.e. of the conversion means, this specific function of the transmission format conversion (i.e. protocol adaption) is specified for the GSM network in the following references which are hereby incorporated by reference:
- 04.22: Radio Link Protocol (RLP) for Data and Telematic Services on the MS-BSS interface and the BSS-MSC Interface
- 07.01: General on Terminal Adaptation Functions (TAF) for Mobile Stations (MS)
- 07.02: Terminal Adaptation Functions (TAF) for services using asynchronous bearer capabilities
- 07.03: Terminal Adaptation Functions (TAF) for services using synchronous bearer capabilities
- 09.04: Interworking between the Public Land Mobile Network (PLMN) and the Circuit Switched Public Data Network (CSPDN)
- 09.06: Interworking between a PLMN and a PSPDN/ISDN for support of Packet Switched Data Transmission Services

### Description of the prior art

Typically, in a telecommunication system TELE shown in Fig. 1, each conversion means terminates a respective data call DC1, DC2,..., DCm from the respective terminal and a respective communication connection C1, C2,..., Cm is used for transferring the digital data of each respective data call to the access server AS. Typically, each connection C1, C2,..., Cm is a separate 64kbit/s line (channel).

On the air-interface (between the terminals and the base station system in the GSM system) each data call DC1, DC2,..., DCm has a basic transmission rate of e.g. 9.6kbit/s (or 14.4kbit/s). For high speed circuit switched data (HSCSD) there is also the possibility that each data call occupies n*time-slots, where n=1...4, and therefore the available user data rate may be n*9.6kbit/s (n*14.4kbit/s). However, traditionally only a separate 64kbit/s link dedicated to each separate data call from the interworking function to the access server AS is used, i.e. a separate link is used for each PPP session (PPP: Point-to-Point Protocol, i.e. a protocol to setup a data call between two points). More specifically, the PPP layer is transparent to the interworking function. Therefore, during a single data call PPP frames coming from the air interface are fed into separated 64kbit/s channels towards the access server AS. That is, each call has its circuit-switched slot on the link between the interworking function and the access server.

WO 97 50230 A (ERICSSON) describes a telecommunication system including a switching means having the features of the preamble of claim 1. By means of a so-called concentration function a plurality of circuit-switched calls are concentrated onto a single communication connection, in particular an Ethernet link which is connected to the switching means and an access server which provides an access to the INTERNET. This concentration of the data traffic has the advantage to not overly bind (i.e. reserve) transport resources in the telecommunication system. However, the bandwidth usage is not optimal because each circuit switched call will use a full bandwidth on the single communication connection.

The paper by Simeonov P. L. et al "INGATE: A distributed intelligent network approach to bridge switching and packet networks", Proceedings of the International Conference on Computer Communications and Networks, January 1, 1997, XP00203675 discloses a switching means for routing GSM calls, i.e. mobile communication network circuit-switched calls, to the Internet. A so-called Internet gateway is set up between an interworking function and the Internet. The gateway acts as a kind of tunnel and all calls are routed to a router of the INTERNET via this tunnel.

The article by Carbone P.: "Internet Thrughway: A Profitable new Route for Data Traffic", Telesis, CA, Bell-Northern Research Ltd. Ottawa, No. 102, December 1, 1996, pages 6-15, XPO 002073917 ISSN: 0040-2710 discloses a switching means which is here called an "Internet thrughway". This Internet thrughway platform can handle V.34 analogue modems and ISDN channels. A routing of calls takes place between a terminating central office and an Internet service provider via some type of link.

### Summary of the invention

As explained above, since a separate communication connection comprising a single 64kbit/s channel is used for each separate data call, there is a non-optimal usage of the PLMN network resources in the intermediate part of the network between IWF and AS, since independent of the data call transmission rate a separate channel is respectively allocated to each data call between the switching means of the mobile network and the access server.

Therefore, the object of the present invention is to provide a switching means and a telecommunication system including such a switching means, such that the network resources of the circuit switched network are efficiently and flexibly used when data calls from the circuit switched network are to be routed to a packet switched network through an access server.

### Solution of the object

A switching means of a circuit switched network for forwarding a plurality of circuit switched calls from a plurality of terminals of said circuit switched network to an access server which provides an access to a packet switched data network, comprising at least one combining means for receiving said calls from said circuit switched network and for combining said calls into a single access server, wherein that said calls are circuit switched data calls; a tunnel is used for the single communication connection, all data calls having the same destination IP address are combined on the tunnel; the tunnel comprises one or more channels; and the circuit-switched calls are flexibly combined on the channels of the tunnel such that the total available bandwidth of the plurality of channels can be used flexibly by all circuit-switched calls.

Furthermore, this object is solved by a telecommunication system including a circuit switched network and at least one packet switched network connected through at least one access server, said circuit switched network comprising at least one switching means as stated above.

According to one aspect of the invention, a combining means is provided for combining or multiplexing the independent data calls from the respective terminals onto a single communication connection connecting the switching means to the access server of the packet switched network. Thus, several data calls can share one or more 64kbit/s channels between the switching means and the access server, i.e. a common link is shared by several Point-to-Point Protocol sessions (PPP sessions). Thus, e.g. depending on the needed user rate, the full bandwidth of the single communication connection can be exploited and therefore the network resources are optimally used.

According to another aspect of the invention, a switching means comprises at least two combining means which each receive the plurality of data calls from the respective terminals. Each combining means is connected at least to a respective first and second access server through a single communication connection, on which the plurality of data calls are combined.

According to yet another aspect of the invention, the telecommunication system according to the invention, comprises two such switching means, whereas each switching means respectively comprises two combining means for receiving the respective data calls. The first combining means of each switching means are connected to a first access server via a single communication connection (used for combining the data calls) and the second combining means are connected to the second access server via a respective single communication connection (again used for the combining). With the provision of a telecommunication system comprising two switching means, the redundancy (safety or resistance) of the system can be improved and simultaneously the traffic conditions for the transfer of the digital data can be further improved.

According to a further aspect of the invention, the circuit switched network is a GSM mobile radio communication network, while the packet switched network is the internet or an intranet. In this case, the switching means is formed by a mobile switching center of said mobile communication network.

Further advantageous embodiments and improvements of the invention are listed in the dependent claims. Hereinafter, the invention will be described with reference to its embodiments and with reference to the attached drawings.

### Brief description of the drawings

- Fig. 1: shows an overview of a telecommunication system TELE comprising a circuit switched network PLMN and a packet switched network connected through an access server AS;
- Fig. 2: shows a switching means MSC1 according to a first embodiment of the invention; and
- Fig. 3: shows two switching means MSC1, MSC2 according to a second embodiment of the invention.

In the drawings, the same or similar reference numerals denote the same or similar parts throughout.

### First embodiment

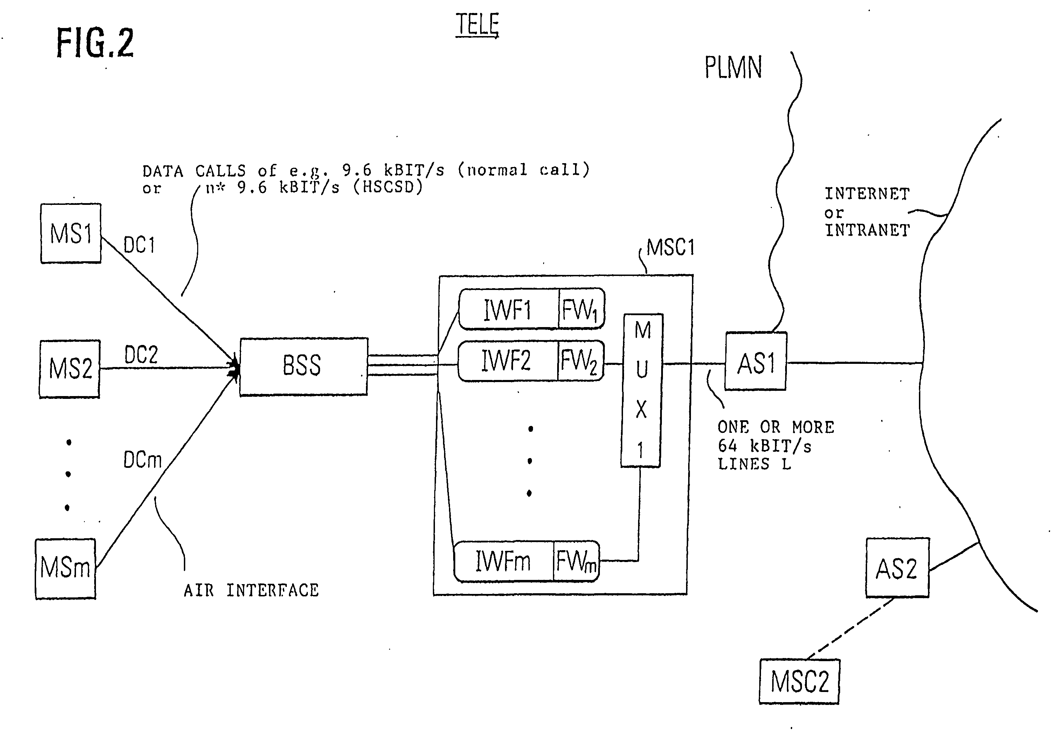

Fig. 2 shows a first embodiment of a switching means MSC1 of a telecommunication system including a circuit switched network PLMN and at least one packet switched data network according to the invention. By contrast to Fig. 1, only one single communication connection L, comprising preferably one or more 64kbit/s communication channels, is connected between the switching means MSC1 and the access server AS1 of said packet switched network. The other units shown in Fig. 2 perform the same function as in Fig. 1. That is, the terminals MS1, MS2,..., MSm issue the respective data calls DC1, DC2,...,DCm to the base station system BSS through the air interface and the respective data calls are received by a respective conversion means IWF1/FW1, IWF2/FW2,...IWFm/FWm. The plurality of conversion means each terminate a respective data call from the circuit switched network PLMN and convert a transmission format of the data calls into a transmission format of said packet data network. As explained above, essentially the conversion means perform a protocol adaption of the transmission formats, i.e. the usual function carried out by an InterWorkingFunction IWF as discussed above. In so far, the switching means MSC1 operates in the same manner as the switching means MSC shown in Fig. 1 according to the prior art.

However, according to the invention, the switching means MSC comprises at least one combining means MUX1 for receiving the data calls from said circuit switched network PLMN and for combining said data calls onto the single communication connection L leading from the switching means MSC1 to the access server AS1. That is, a combining of the data calls on one or more 64kbit/s channels (forming the single communication connection L) is performed, such that e.g. the bandwidth available on each channel can be optimally used depending on the user rate of each data call. One data call can for example also be distributed on several 64kbit/s channels.

The concept of combining several data calls onto a single communication connection is very different to the conventional concept in Fig. 1. Each data call in Fig. 1 and Fig. 2 indicates respectively the IP address of the desired access server AS. In Fig. 1 this results in the setting up of a separate tunnel to the access server AS for each data call. In Fig. 2, only one tunnel is set up between the switching means and the access server having the indicated IP address and all data calls indicating the same IP address are combined on this single tunnel. If the tunnel consists only of one channel of predetermined transmission rate, e.g. 64kbit/s, then the bandwidth is distributed among the several calls. If a tunnel consists of a plurality of channels, then separated calls can use separate channels or can even be distribued among several channels.

Thus, the combining means MUX1 really combines (multiplexes) or sets up data calls having the same destination IP address on a single communication connection L. As a further embodiment, the combining means MUX1 can be a multiplexer, which multiplexes the data calls onto one or more of the channels of the tunnel (communication connection) L.

Therefore, when there is data traffic in the mobile radio communication network PLMN, then - using the inventive combining means according to the invention - the data traffic is concentrated as close to the users' access point in the MSC as possible. The combining or multiplexing factor for bursty applications, such as web-surfing the internet, is between 1:5 to 1:10. Hence, a significant reduction in the PLMN network resources can be achieved. This is in particular important, since web-surfing sessions can last for much longer than a normal telephone speech call and also the number of data (IP packets) is much higher than in a normal telephone call.

Thus, using the combining means MUX1 in the switching means MSC1, the concentration is brought as close as possible to the access point. The combining means MUX1 is located in the most natural way near the conversion means (i.e. near the interworking functions), since it is here that the radio link protocols (RLPs) are terminated. A further advantage of the system is, that the already deployed GSM switching infrastructure (if the mobile radio communication network operates according to the GSM standard) is improved for the transfer of IP traffic without changing the system architecture. Network resources, i.e. the bandwidth on the communication connection (line) between the access server AS and the switching means MSC, can be saved, because the data traffic in a GSM PLMN is combined in a new way.

Although Fig. 2 shows the combining means MUX1 as a separate unit receiving the data calls having their transmission formats converted by the respective conversion means (interworking functions), the combining means MUX1 may also be directly constituted and incorporated in the respective conversion means. Furthermore, it is also possible to incorporate already part of the access server AS1 into the combining means MUX1.

Whilst the single communication connection L can comprise one or more 64kbit/s channels, it should be noted that according to the invention a flexible combining or multiplexing of the data calls onto these one or more 64kbit/s channels can be provided by contrast to the prior art where a single line (tunnel) is always allocated to one data call only. Of course, the respective channels may have different bandwidths other than 64kbit/s.

The combining or multiplexing procedure carried out by the combining means MUX1 can be performed as follows. If for example each data call DC1, DC2,...DCm has a bandwidth of 9.6kbit/s (assuming a normal data call), then the combining means uses a time slot of 9.6kbit/s on the respective 64kbit/s channel several times in accordance with the number of data calls. In total 64kbit/s divided by 9.6kbit/s 6 data calls can be multiplexed onto a separate channel.

On the other hand, the invention is not restricted to the usage of a single 64kbit/s channel, since the single communication connection may comprise a plurality of 64kbit/s channels. However, the individual data calls are combined or multiplexed onto these one or more channels in a flexible way which leads to the optimal use of the available bandwidth on the one or more channels. By contrast, in the prior art the bandwidth is not optimally used due to the fixed allocation of a single channel to a single data call.

Furthermore, Fig. 2 also shows a further access server AS2 connected to a further switching means MSC2, which can be used to increase the redundancy and the traffic resource usage in connection with using a combining or multiplexing on a single communication connection, as will be described below with reference to the second embodiment.

Furthermore, the access server AS2 can instead also be connected to the switching means MSC1, wherein the switching means can combine a first set of data calls on a connection between MSC1 and AS1 and a second set of calls on a connection between MSC2 and AS2. The access server AS2 can be connected to the same network to which AS1 is connected, or AS1, AS2 can be connnected to two different networks. Of course, more than two access servers may be connected with the switching means MSC1.

### Second embodiment

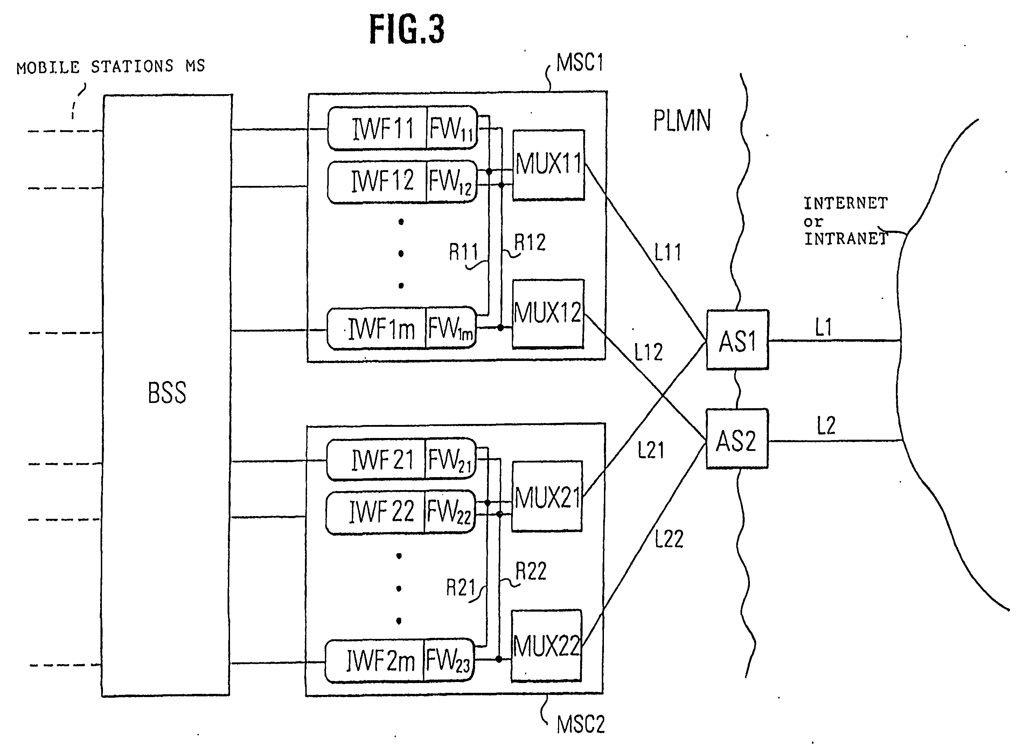

As was already explained before, a redundant configuration of a first access server AS1 and a second access server AS2 respectively connected to a first switching means MSC1 (i.e. a mobile switching center) and a second switching means MSC2, as shown in Fig. 2, can be used in order to increase the network resistance, e.g. in case one of the access servers fails. Fig. 3 shows a second embodiment of the invention, where a telecommunication system (i.e. the circuit switched network) comprises at least two switching means MSC1, MSC2, each comprising at least two combining means MUX11, MUX12; MUX21, MUX22. Each combining means MUX11, MUX12, MUX21, MUX22 basically performs the same function as the combining means (e.g. MUX1) in Fig. 2.

As is shown in Fig. 3, a first combining means MUX11, performing the same function as the combining means MUX1 in Fig. 2, is connected via a communication connection L11 to a first access server AS1. Also the first combining means MUX21 of the second switching means is connected to the first access server AS1 through a single communication connection L21. The respective second combining means MUX12, MUX22 are respectively connected to the second access server AS2 via a separate communication connection L12, L22. The access servers AS1, AS2 then lead the traffic via separate communication connections L1, L2 to the packet switched network (internet or intranet).

As was the case in Fig. 2, also in Fig. 3 the base station system BSS provides the individual data calls first to a conversion means IWF11/FW11, IWF12/FW12,...IWF1m/FW1m; IWF21/FW21, IWF22/FW22,...IWF2m/FW2m. In Fig. 3 the outputs from the respective conversion means are interconnected through common logical connections using a simple PPP tunneling protocol, i.e. each output by the conversion means is respectively provided through an Ethernet R11, R12; R21, R22 to the respective combining means MUX11, MUX12; MUX21, MUX22. That is, in Fig. 3 respective data calls are respectively input to each of the conversion means which input the calls to the first and second combining means MUX11, MUX12, MUX21, MUX22. It should be noted that it is not necessary to use the Ethernets R11, R12; R21, R22 since the output from the respective conversion means may be directly input to the respective combining means.

The redundant configuration shown in Fig. 3, where a telecommunication system comprises the first and second switching means MSC1, MSC2 can have a far improved traffic condition, since more packets per second can be provided to the internet, when a number of data calls are input to the conversion means. That is, the provision of a first and second switching means, together with the combining means MUX11, MUX12, MUX21, MUX22 performing the respective combining of the number of data calls input to the respective switching means onto the respective single communication connections (tunnels) L11, L12, L21, L22, allows the use of two access servers AS1, AS2. Thus, a mobile data call, even if one switching means MSC1 or MSC2 (mobile switching center) fails, can be routed to a desired access server through the still operating MSC, since both MSCs are connected to both access servers AS1, AS2 using the combining procedure.

Furthermore, it should be noted that the redundant configuration shown in Fig. 3 as an example with two switching means MSC1, MSC2 can also be extended to comprise simultaneously a plurality of switching means interconnected in the same manner as the two switching means shown in Fig. 3. Also, as mentioned before, each switching means can comprises more than two combining means and more than two access servers may be provided.

It should be noted that also the MUX1 in Fig. 2 is in principle an interworking function just as the conversion means is. Then, viewing also the combining means MUX11, MUX12, MUX21, MUX22 as an interworking function IWF, the function carried out in individual steps in Fig. 2 or 3 is as follows.

The packets arrive asynchronously at the IWF. They are detected and forwarded to the respective access server, i.e. packets are forwarded via a tunnel to the access server AS. The forwarded packets are thus transmitted on a semi-permanent connection between the forwarding block FW of the IWF and the access server AS. The building of the tunnel is in fact what is achieved by the combining procedure as is generally described by the combining means MUX1 in Fig. 2.

### Industrial applicability

As explained above, according to the invention the data calls are combined or multiplexed onto a single communication connection comprising one or more channels between a switching means of a circuit switched network and an access server leading to a packet switched network. Independent of the type of interworking function used for the transmission format conversion, the invention can be used for any interconnection of circuit switched network and packet switched network, in particular for the interconnection of a mobile radio communication network and the internet.

Furthermore, the invention is not restricted to circuit switched networks operating according to the GSM standards. Therefore, any other type of mobile radio communication network or circuit switched network can benefit from the combining or multiplexing procedure according to the invention.

## Claims

1. A switching means (MSC1; Fig. 2) of a circuit switched network (PLMN) for forwarding a plurality of circuit switched data calls (DC1, DC2,...DCm) from a plurality of terminals (MS1, MS2,...MSm) of said circuit switched network to a single access server (AS1) which provides an access to a packet switched data network (INTERNET, INTRANET), comprising a plurality of conversion means (IWF1/FW1, IWF2/FW2,..., IWFm/FWm) for terminating a respective data call from said circuit switched network and for respectively converting a transmission format of said data calls into a transmission format of said packet data network,
**characterized by**
at least one multiplexing means (MUX1) adapted to directly (e.g. IWF1/FW1, MUX1; Fig. 2) receive from the conversion means (IWF1/FW1, IWF2/FW2,..., IWFm/FWm) the data calls having the converted transmission format and to multiplex said calls onto a single physical communication connection (L) directly connecting said switching means (MSC1) and said single access server (AS1), wherein
all data calls having the same destination IP address are multiplexed onto the same single physical communication connection (L); said single physical communication connection (L) comprises one or more physical channels; and the circuit-switched calls having the converted transmission format are flexibly multiplexed on the physical channels of the single physical communication connection (L) such that the total available bandwidth of the plurality of physical channels can be used flexibly by all circuit-switched calls.

2. A switching means (MSC1, Fig. 2) according to claim 1,
***characterized in that***
said single physical communication connection (L) comprises one or more 64kbit/s physical channels.

3. A switching means (MSC1, Fig. 2) according to claim 1,
***characterized in that***
each conversion means (IWF1/FW1, IWF2/FW2,..., IWFm/FWm) and said combining means (MUX) are formed by an InterWorkingFunction/ForwardingFunction unit (IWF1/FW1, IWF2/FW2,..., IWFm/FWm) of the mobile radio communication network (PLMN).

4. A switching means (MSC1, Fig. 2) according to claim 1,
***characterized in that***
said circuit switched network (PLMN) is a mobile radio communication network, said packet switched network is the Internet or an Intranet, and said switching means (MSC1, Fig. 2) is a mobile switching center of said circuit switched network (PLMN).

5. A switching means (Fig. 3) according to claim 1,
***characterized by***
at least a first and a second combining means (MUX11, MUX12; MUX21, MUX22) each receiving data calls from said circuit switched network and each combining said data calls onto a respective single communication connection (L11, L12; L21, L22) between said respective combining means (MUX11, MUX12; MUX21, MUX22) and at least a respective first and second access server (AS1, AS2) each providing an access to the packet switched network.

6. A telecommunication system (TELE; Fig. 2) including a circuit switched network (PLMN) and at least one packet switched network (INTERNET, INTRANET) connected through at least one access server (AS1, AS2), said circuit switched network (PLMN) comprising at least one switching means (MSC1, MSC2) according to one ore more of claims 1-5.

7. A telecommunication system (Fig. 3) according to claim 6,
***characterized in that***
a first and second switching means (MSC1, MSC2) according to claim 5 and a first and second acess server (AS1, AS2) are provided, wherein a respective first combining means (MUX11, MUX21) of the first and second switching means (MSC1, MSC2) each combine said received data calls onto a respective single communication connection (L11, L21) between said respective first combining means (MUX11; MUX21) and said first access server (AS1), and a respective second combining means (MUX21, MUX22) of the first and second switching means (MSC1, MSC2) each combine said data calls onto a respective single communication connection (L21, L22) between said respective second combining means (MUX21, MUX22) and said second access server (AS2).

## Patentansprüche

1. Ein Schaltmittel (MSC1; Figur 2) eines leitungsvermittelten Netzes (PLMN) für das Weiterleiten einer Vielzahl von leitungsvermittelten Daten/Sprach-Verbindungen (DC1, DC2, ...DCm) von einer Vielzahl von Endgeräten (MS1, MS2, ...MSm) des leitungsvermittelten Netzes an einen einzelnen/einzigen Zugangs-Server (AS1), welcher einen Zugang zu einem Paketvermittlungs-Daten-Netz (INTERNET, INTRANET) bereitstellt, umfassend eine Vielzahl von Umwandlungsmitteln (IWF1/FW1, IWF2/FW2, ...IWFm/FWm) für das Abschließen einer zugehörigen Daten/Sprach-Verbindung des leitungsvermittelten Netzes und für das entsprechende Umwandeln eines Übertragungsformats der Daten/Sprach-Verbindungen in ein Übertragungsformat des Paketdaten-Netzes,
**gekennzeichnet durch**
zumindest ein Multiplex-Mittel (MUX1), angepasst um direkt (z. B. IWF1/FW1, MUX1; Figur 2) von den Umwandlungsmitteln (IWF1/FW1, IWF2/FW2, ...IWFm/FWm) die das umgewandelte Übertragungsformat aufweisenden Daten/Sprach-Verbindungen zu empfangen und um die Verbindungen auf eine einzelne/einzige physikalische Kommunikationsverbindung (L), welche das Schaltmittel (MSC1) und den einzelnen/einzigen Zugangs-Server (AS1) direkt verbindet, zu multiplexen, wobei
- alle Daten/Sprach-Verbindungen mit derselben Zieladresse IP auf dieselbe einzelne/einzige Kommunikationsverbindung (L) gemultiplext sind;
- die einzelne/einzige physikalische Kommunikationsverbindung (L) einen oder mehrere physikalisch Kanäle umfasst; und
- die das umgewandelte Übertragungsformat aufweisenden leitungsvermittelten Verbindungen flexibel auf die physikalischen Kanäle der einzelnen/einzigen Kommunikationsverbindung (L) gemultiplext sind, so dass die gesamte verfügbare Bandbreite der Vielzahl von physikalischen Kanälen flexibel **durch** alle leitungsvermittelten Daten/Sprach-Verbindungen genutzt werden kann.

2. Ein Schaltmittel (MSC1, Figur 2) nach Anspruch 1,
**dadurch gekennzeichnet, dass**
die einzelne/einzige physikalische Kommunikationsverbindung (L) eine oder mehrere physikalische 64 kbit/s Kanäle umfasst.

3. Ein Schaltmittel (MSC1, Figur 2) nach Anspruch 1,
**dadurch gekennzeichnet, dass**
jedes Umwandlungsmittel (IWF1/FW1, IWF2/FW2, ...IWFm/FWm) und das Vereinigungsmittel (MUX) durch eine Zwischenverarbeitungs/Weiterleitungs-Funktion (IWF1/FW1, IWF2/FW2, ...IWFm/FWm) des Mobilfunk-Kommunikationsnetzes (PLMN) gebildet ist.

4. Ein Schaltmittel (MSC1, Figur 2) nach Anspruch 1,
**dadurch gekennzeichnet, dass**
das leitungsvermittelte Netz (PLNM) ein Mobilfunk-Kommunikationsnetz, das Paketvermittlungs-Netz das Internet oder ein Intranet, und das Schaltmittel (MSC1, Figur 2) ein Mobil-Schaltzentrum des leitungsvermittelten Netzes (PLMN) ist.

5. Ein Schaltmittel (Figur 3) nach Anspruch 1,
**gekennzeichnet durch**
zumindest ein erstes und ein zweites Vereinigungsmittel (MUX11, MUX12; MUX21, MUX22), jedes empfangend Daten/Sprach-Verbindungen von dem leitungsvermittelten Netz, und jedes vereinigend die Daten/Sprach-Verbindungen in eine zugehörige einzelne Kommunikationsverbindung (L11, L12; L21, L22) zwischen den zugehörigen Vereinigungsmitteln (MUX11, MUX12; MUX21, MUX22) und zumindest einem zugehörigen, jeweils einen Zugang zu dem Paketvermittlungs-Netz bereitstellenden, ersten und zweiten Zugangs-Server (AS1, AS2).

6. Ein Telekommunikationssystem (TELE; Figur 2) einschließend ein leitungsvermitteltes Netz (PLMN) und zumindest ein Paketvermittlungs-Netz (INTERNET, INTRANET) verbunden durch zumindest einen Zugangs-Server (AS1, AS2), wobei das leitungsvermittelte Netz (PLMN) zumindest ein Schaltmittel (MSC1, MSC2), entsprechend einem oder mehreren der Ansprüche 1-5, umfasst.

7. Ein Telekommunikationssystem (Figur 3) nach Anspruch 6,
**dadurch gekennzeichnet, dass**
ein erstes und zweites Schaltmittel (MSC1, MSC2), entsprechend Anspruch 5, und ein erster und zweiter Zugangs-Server (AS1, AS2) bereitgestellt sind, wobei ein zugehöriges erstes Vereinigungsmittel (MUX11, MUX21) des ersten und zweiten Schaltmittels (MSC1, MSC2) jeweils die empfangenen Daten/Sprach-Verbindungen auf eine zugehörige einzelne Kommunikationsverbindung (L11, L21) zwischen dem zugehörigen ersten Vereinigungsmittel (MUX11, MUX12) und dem ersten Zugangs-Server (AS1) vereinigt, und ein zugehöriges zweites Vereinigungsmittel (MUX21, MUX22) des ersten und zweiten Schaltmittels (MSC1, MSC2) jeweils die Daten/Sprach-Verbindungen auf eine zugehörige einzelne Kommunikationsverbindung (L21, L22) zwischen dem zugehörigen zweiten Vereinigungsmittel (MUX21, MUX22) und dem zweiten Zugangs-Server (AS2) vereinigt.

## Revendications

1. Moyen (MSC1 ; figure 2) de commutation d'un réseau à commutation de circuits (PLMN) destiné à acheminer une pluralité d'appels (DC1, DC2, ... DCm) de données sur commutation de circuits provenant d'une pluralité de terminaux (MS1, MS2, ... MSm) dudit réseau à commutation de circuits jusqu'à un unique serveur d'accès (AS1) qui fournit un accès à un réseau de données à commutation de paquets (INTERNET, INTRANET), comprenant une pluralité de moyens (IWF1/FW1, IWF2/FW2, ..., IWFm/FWm) de conversion pour terminaison d'un appel de données respectif provenant dudit réseau à commutation de circuits et pour convertir respectivement un format de transmissions desdits appels de données en un format de transmission dudit réseau de données par paquets ;
**caractérisé par**
au moins un moyen (MUX1) de multiplexage adapté pour recevoir directement (par exemple, IWF1/FW1, MUX1 ; figure 2) à partir des moyens (IWF1/FW1, IWF2/FW2, ..., IWFm/FWm) de conversion les appels de données ayant le format de transmission converti et pour multiplexer lesdits appels sur une unique connexion physique (L) de communication reliant directement ledit moyen (MSC1) de commutation et ledit unique serveur d'accès (AS1) ; où
tous les appels de données ayant la même adresse IP de destination sont multiplexés sur la même unique connexion physique (L) de communication ; ladite unique connexion physique (L) de communication comprend une ou plusieurs voies physiques ; et les appels sur commutation de circuits ayant le format de transmission converti sont multiplexés de manière souple sur les voies physiques de l'unique connexion physique (L) de communication de sorte que la largeur de bande totale disponible de la pluralité de voies physiques peut être utilisée de manière souple par tous les appels sur commutation de circuits.

2. Moyen (MSC1, figure 2) de commutation selon la revendication 1, **caractérisé en ce que**
ladite unique connexion physique (L) de communication comprend une ou plusieurs voies physiques à 64 kbit/s.

3. Moyen (MSC1, figure 2) de commutation selon la revendication 1, **caractérisé en ce que**
chaque moyen (IWF1/FW1, IWF2/FW2, ..., IWFm/FWm) de conversion et ledit moyen (MUX) de combinaison sont constitués par une unité (IWF1/FW1, IWF2/FW2, ..., IWFm/FWm) de fonction d'interfonctionnement/fonction d'acheminement du réseau (PLMN) de communications radio mobiles.

4. Moyen (MSC1, figure 2) de commutation selon la revendication 1, **caractérisé en ce que**
ledit réseau (PLMN) à commutation de circuits est un réseau de communications radio mobiles, **en ce que** ledit réseau à commutation de paquets est l'Internet ou un Intranet, et **en ce que** ledit moyen (MSC1 ; figure 2) de commutation est un centre de commutation du service mobile dudit réseau (PLMN) à commutation de circuits.

5. Moyen (figure 3) de commutation selon la revendication 1, **caractérisé par**
au moins un premier et un second moyen (MUX11, MUX12 ; MUX21, MUX22) de combinaison recevant chacun des appels de données provenant dudit réseau à commutation de circuits et combinant chacun lesdits appels de données sur une unique connexion respective (L11, L12 ; L21, L22) de communication entre lesdits moyens respectifs (MUX11, MUX12 ; MUX21, MUX22) de combinaison et au moins un premier et un second serveur respectif (AS1, AS2) d'accès fournissant chacun un accès au réseau à commutation de paquets.

6. Système (TELE ; figure 2) de télécommunications incluant un réseau (PLMN) à commutation de circuits et au moins un réseau (INTERNET, INTRANET) à commutation de paquets connectés par intermédiaire d'au moins un serveur (AS1, AS2) d'accès, ledit réseau (PLMN) à commutation de circuits comprenant au moins un moyen (MSC1, MSC2) de commutation selon une ou plusieurs des revendications 1 à 5.

7. Système (figure 3) de télécommunications selon la revendication 6, **caractérisé en ce que**
un premier et un second moyen (MSC1, MSC2) de commutation selon la revendication 5 et un premier et un second serveur (AS1, AS2) d'accès sont prévus, alors que des premiers moyens respectifs (MUX11, MUX21) de combinaison des premier et second moyens (MSC1, MSC2) de commutation combinent chacun lesdits appels de données reçus sur une unique connexion respective (L11, L21) de communication entre lesdits premiers moyens respectifs (MUX11 ; MUX21) de combinaison et ledit premier serveur (AS1) d'accès, et que des seconds moyens respectifs (MUX21, MUX22) de combinaison des premier et second moyens (MSC1, MSC2) de commutation combinent chacun lesdits appels de données sur une unique connexion respective (L21, L22) de communication entre lesdits seconds moyens respectifs (MUX21, MUX22) de combinaison et ledit second serveur (AS2) d'accès.
